(19) Europäisches Patentamt

European Patent Office

Office européen des brevets

(11) EP 1 780 090 A1

(12) EUROPEAN PATENT APPLICATION

(43) Date of publication:
02.05.2007 Bulletin 2007/18

(51) Int Cl.:
B60W 40/08 (2006.01)

(21) Application number: 05425759.7

(22) Date of filing: 28.10.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(71) Applicant: CRF Societa'Consortile per Azioni
10043 Orbassano (Torino) (IT)

(72) Inventors:
• Gambera, Mario
c/o C.R.F. SCpA.
10043 Orbassano (IT)

• Mauro, Marco
c/o C.R.F. SCpA.
10043 Orbassano (IT)
• Bianconi, Maria, Paola
c/o C.R.F. SCpA.
10043 Orbassano (IT)

(74) Representative: Bongiovanni, Simone et al
Studio Torta S.r.l
Via Viotti 9
10121 Torino (IT)

(54) **Method for defining the driving style of a vehicle driver**

(57)    A method for defining the driving style of a vehicle driver in which there are envisaged the following steps: an initial self-learning step in which there are monitored a plurality of actions performed by the vehicle driver for calculating a plurality of standardised manoeuvre indexes ($E_j$), each of which is expressed as an action typically performed by the driver; an on-line calculation step in which the standardised manoeuvre indexes ($E_j$) calculated for different actions are grouped together for calculating a total manoeuvre index ($X$) representing the driving style; and a comparing step in which the total manoeuvre index ($X$) is compared with at least one threshold to determine the current driving style of the driver.

Fig.1

**Description**

The present invention relates to a method for defining the driving style of a vehicle driver, particularly a motor vehicle, for example a car.

As known, the driving style is an extremely personal feature of each individual and depends on the person's ability and driving experience but also on the psychophysical conditions of the individual themselves.

In some case, following a deterioration of the psychophysical conditions (due to stress, abuse of alcohol, medicines and drugs) of the driver, the driving style may worsen considerably thus leading to an essentially dangerous driving condition.

Unfortunately, in such conditions, generally the vehicle drivers are unaware of the severe worsening of their attention conditions and, underestimating the risks, continue to drive the vehicle taking themselves always more towards a conditions of danger for themselves and for others.

A correct driving style is even more required for the drivers of vehicles used for transporting people (consider for example bus drivers) and/or drivers who must drive in sensitive areas, such as schools, hospitals, tunnels, airports, etc.

It is the object of the present invention to obtain a method by means of which the instantaneous driving style can be determined simply and rapidly.

The preceding object is achieved by the present invention in that it relates to a method for defining the driving style of a vehicle driver, as defined in claim 1.

The invention will now be illustrated with particular reference to the attached drawings, in which:

- figure 1 schematically shows the operations obtained by the method of the present invention;
- figure 2 shows a displaying mode of the data processed by the method according to the present invention; and
- figure 3 shows a table which contains examples of possible manoeuvres performed by the driver and quantities associated thereto, according to which it is possible to infer the driving style of the driver.

The method according to the present invention comprises (block 200) an initial self-learning step at the end of which one passes to an "on-line" calculation step (block 300 after block 200) and finally to a representation and/or transmission/sharing step of the calculated data (block 400 after block 300).

The self-learning step consists of the following sub-steps:

- monitoring of a set of quantities $E_1$, $E_2$, ..., $E_j$ (block 210) each of which is associated to an action (manoeuvre) performed by the driver;
- acquisition of a plurality of measured values $V_1$, $V_2$, ..., $V_n$ for each monitored quantity (block 220 after 210) ;
- calculation of variance $Dev\_st$ and average value m of each monitored quantity $E_j$, according to the measured values $V_1$, $V_2$, ..., $V_n$ (block 230 after 220).

The self-learning step ends (block 240), for a specific quantity, when a maximum number of acquisitions have been operated and/or when the variance is lower than a determined threshold and/or at the end of a predetermined time range; when the aforementioned conditions occur ends the self-learning step for that action.

In this way, for each monitored action, there are used the first acquisitions to characterise the manoeuvre as "typically performed" by the driver.

The method of the present invention therefore envisages the calculation of a standardised manoeuvre index (block 260) defined as:

$$I_j = (E_j - m) / Dev\_st \qquad (1)$$

where $E_j$ is the quantity associated to the manoeuvre performed by the driver, m represents indeed the average value of the previously calculated quantity and $Dev\_st$ is the quantity variance.

The block 200 comprises an initial resetting step (block 310) and then a plurality of steps, in which:

- for each action (manoeuvre) performed by the driver is calculated (block 320) the respective manoeuvre index $I_j$ by the expression (1);
- the indexes calculated for different actions (manoeuvres) are grouped together to calculate a total index X representing the driving style.

Conveniently, the total index X is calculated by the expression:

$$X = \Sigma_{j}(P_{j} * I_{j}) \tag{2}$$

where $I_j$ represents indeed the manoeuvre index and $P_j$ is an experimentally calculated weight.

Then the total index is compared (block 340) with a set of thresholds $S_1, S_2, ..., S_n$ to define the current driving style of the driver.

The information related to the instantaneous driving style of the driver may then be displayed (block 410) and used to provide a plurality of indications including:

- indications directly provided to the driver to indicate to the driver a variation of their habitual driving style and thus highlight a potentially dangerous driving condition - for example it may be provided a danger indication due to slow reflexes and/or uncoordinated driving to the driver who is driving under the influence of alcohol or medicines (consider for example the strong alterations of the psyche induced by some commonly used medicines);
- the danger indications may also be transmitted (block 420) to a central processing unit (not shown) which monitors the psychophysical conditions of the driver; such safety function is particularly important for managing vehicle fleets for transporting people, for example buses; and
- the transmitted driving style information may be used to monitor access to sensitive areas (schools, hospitals, limited access zones, tunnels, etc.) in order to prevent and/or limit the access to such zones to persons having a potentially dangerous driving style.

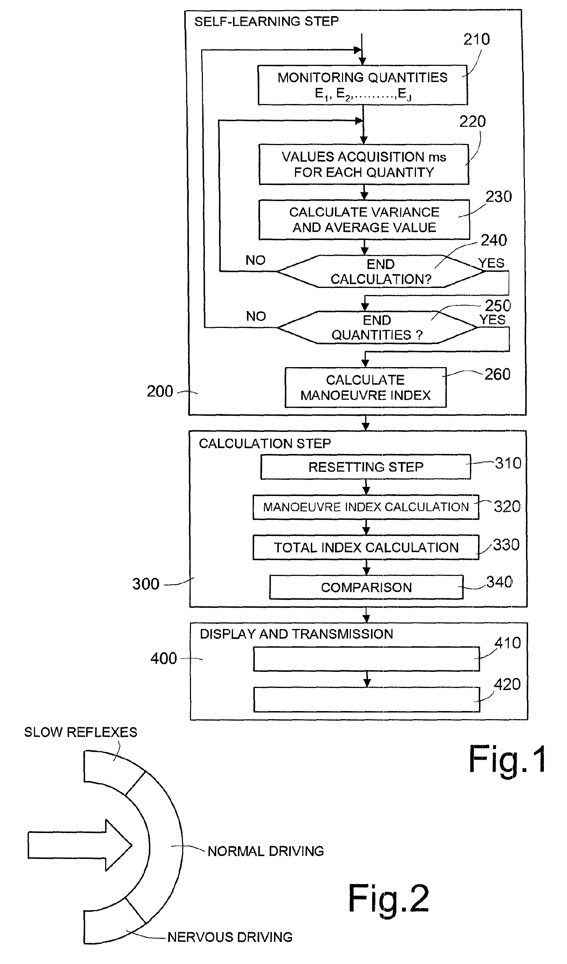

A display example is shown in figure 2 in which it is shown an "analogue" display type in which an index indicates a normal driving zone delimited, on opposite sides, by a "nervous" therefore essentially dangerous driving zone and an equally dangerous driving zone with slow reflexes.

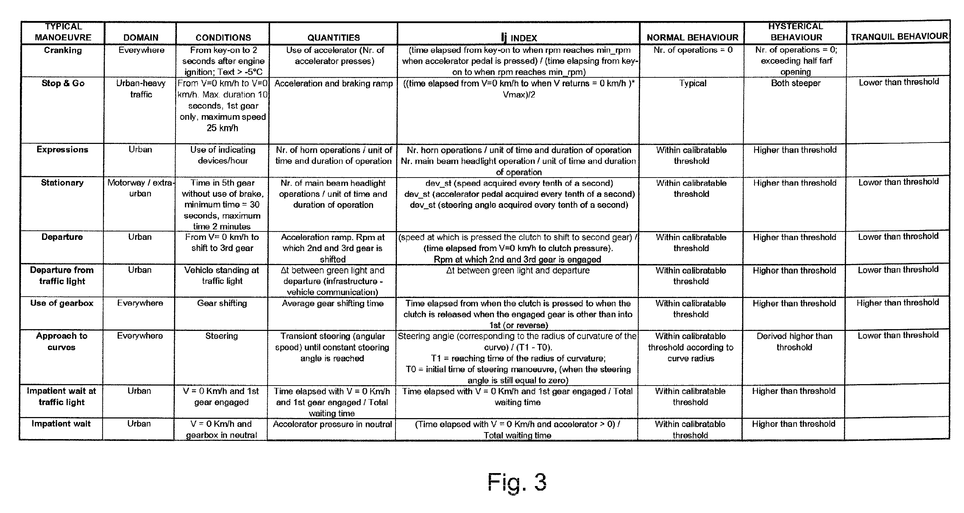

Figure 3 shows a table with examples of possible manoeuvres performed by the driver and of monitorable quantities associated thereto, according to which it is possible to infer the driving style of the driver.

In particular, the table in figure 3 shows, for each possible manoeuvre performable by the driver:

- the operative conditions of the vehicle which define each type of manoeuvre;
- the monitorable quantities $E_1, E_2, ..., E_j$ which may condition the trend; and
- the calculation method of the respective standardised manoeuvre index $I_j$.

**Claims**

1.  A method for defining the driving style of a vehicle driver, **characterised in that** it comprises:

    • an initial self-learning step (200) in which there are monitored a plurality of actions performed by the vehicle driver to calculate a plurality of standardised manoeuvre indexes ($I_j$), each of which expresses how an action is typically performed by the driver;
    • an on-line calculation step (300) in which the standardised manoeuvre indexes ($I_j$) calculated for different actions are grouped together to calculate a total manoeuvre index (X) representing the driving style; and
    • a comparing step in which the total manoeuvre index (X) is compared with at least one threshold to determine the current driving style of the driver.

2.  A method according to claim 1, in which said initial self-learning step comprises the steps of:

    • monitoring (210) a set of quantities ($E_1, E_2, ..., E_j$), each of which is associated to an action performed by the driver;
    • acquiring (220), for each monitored quantity ($E_1, E_2, ..., E_j$), a plurality of measured values ($V_1, V_2, ..., V_n$);
    • calculating (230) the variance *(Dev_st)* and the average value *(m)* of each monitored quantity ($E_1, E_2, ..., E_j$) according to said measured values ($V_1, V_2, ..., V_n$).

3.  A method according to claim 2, in which said self-learning step ends (240), for a specific quantity ($E_1, E_2, ..., E_j$), when it has been performed a maximum number of acquisitions and/or when the variance if lower than a determined threshold and/or at the end of a predetermined time range.

**4.** A method according to claim 2, in which said self-learning step comprises a step of calculating (260) said standardised manoeuvre index ($I_j$), defined as:

$$I_j = (E_j - m) / Dev\_st$$

where $E_j$ is said monitored quantity, m represents the average value of said previously calculated monitored quantity, and *Dev_st* the monitored quantity variance.

**5.** A method according to claim 4, in which said on-line calculation step (300) comprises a plurality of steps in which:

• for each action (manoeuvre) performed by the driver is calculated (320) a respective standardised standardization index ($I_j$);
• the standardised manoeuvre indexes ($I_j$) calculated for different actions are grouped together to calculate said total manoeuvre index ($X$) representing the driving style of the driver.

**6.** A method according to claim 5, in which said total manoeuvre index ($X$) is calculated by the expression:

$$X = \Sigma_j(P_j \star I_j)$$

where $I_j$ represents said standardised manoeuvre index and $P_j$ is a respective weight experimentally calculated.

**7.** A method according to claim 2, in which said monitored quantities ($E_1, E_2, ..., E_j$) associated to an action performed by the driver are chosen from the group comprising:

• the number of operations of a vehicle accelerator pedal;
• the time elapsed between the vehicle acceleration from stationary and the following stop, when first gear is engaged;
• the number of operations of an acoustic indication device of the vehicle and the duration of each operation;
• the number of operations of main beam headlights and the duration of each operation;
• the variation of the vehicle travelling speed;
• the variation of the accelerator pedal position;
• the variation of the vehicle steering profile;
• the engine number of revolutions at which second and third gears of the vehicle are engaged;
• the time elapsed between the instant in which traffic light near where said vehicle stands turns green and the subsequent departure of the vehicle;
• the average gear shifting time;
• the time elapsed with the vehicle stationary when the first gear is engaged;
• the number of operations of the vehicle accelerator pedal when no gear is engaged; and
• the angular speed indicated by the movement of a steering device of the vehicle.

**SELF-LEARNING STEP**

MONITORING QUANTITIES $E_1, E_2, \ldots, E_J$ — 210

VALUES ACQUISITION ms FOR EACH QUANTITY — 220

CALCULATE VARIANCE AND AVERAGE VALUE — 230

NO ← END CALCULATION? → YES — 240

NO ← END QUANTITIES ? → YES — 250

CALCULATE MANOEUVRE INDEX — 260

200

**CALCULATION STEP**

RESETTING STEP — 310

MANOEUVRE INDEX CALCULATION — 320

TOTAL INDEX CALCULATION — 330

COMPARISON — 340

300

**DISPLAY AND TRANSMISSION**

400

— 410

— 420

# Fig.1

SLOW REFLEXES

NORMAL DRIVING

NERVOUS DRIVING

# Fig.2

| TYPICAL MANOEUVRE | DOMAIN | CONDITIONS | QUANTITIES | Ij INDEX | NORMAL BEHAVIOUR | HYSTERICAL BEHAVIOUR | TRANQUIL BEHAVIOUR |
|---|---|---|---|---|---|---|---|
| Cranking | Everywhere | From key-on to 2 seconds after engine ignition; Text > -5°C | Use of accelerator (Nr. of accelerator presses) | (time elapsed from key-on to when rpm reaches min_rpm when accelerator pedal is pressed) / (time elapsing from key-on to when rpm reaches min_rpm) | Nr. of operations = 0 | Nr. of operations = 0; exceeding half farf opening | |
| Stop & Go | Urban-heavy traffic | From V=0 km/h to V=0 km/h. Max. duration 10 seconds, 1st gear only, maximum speed 25 km/h | Acceleration and braking ramp | ((time elapsed from V=0 km/h to when V returns = 0 km/h )* Vmax)/2 | Typical | Both steeper | Lower than threshold |
| Expressions | Urban | Use of indicating devices/hour | Nr. of horn operations / unit of time and duration of operation | Nr. horn operations / unit of time and duration of operation Nr. main beam headlight operation / unit of time and duration of operation | Within calibratable threshold | Higher than threshold | |
| Stationary | Motorway / extra-urban | Time in 5th gear without use of brake, minimum time = 30 seconds, maximum time 2 minutes | Nr. of main beam headlight operations / unit of time and duration of operation | dev_st (speed acquired every tenth of a second) dev_st (accelerator pedal acquired every tenth of a second) dev_st (steering angle acquired every tenth of a second) | Within calibratable threshold | Higher than threshold | Lower than threshold |
| Departure | Urban | From V= 0 km/h to shift to 3rd gear | Acceleration ramp. Rpm at which 2nd and 3rd gear is shifted | (speed at which is pressed the clutch to shift to second gear) / (time elapsed from V=0 km/h to clutch pressure). Rpm at which 2nd and 3rd gear is engaged | Within calibratable threshold | Higher than threshold | Lower than threshold |
| Departure from traffic light | Urban | Vehicle standing at traffic light | Δt between green light and departure (infrastructure - vehicle communication) | Δt between green light and departure | Within calibratable threshold | Higher than threshold | Lower than threshold |
| Use of gearbox | Everywhere | Gear shifting | Average gear shifting time | Time elapsed from when the clutch is pressed to when the clutch is released when the engaged gear is other than into 1st (or reverse) | Within calibratable threshold | Higher than threshold | Higher than threshold |
| Approach to curves | Everywhere | Steering | Transient steering (angular speed) until constant steering angle is reached | Steering angle (corresponding to the radius of curvature of the curve) / (T1 - T0). T1 = reaching time of the radius of curvature; T0 = initial time of steering manoeuvre, (when the steering angle is still equal to zero) | Within calibratable threshold according to curve radius | Derived higher than threshold | Lower than threshold |
| Impatient wait at traffic light | Urban | V = 0 Km/h and 1st gear engaged | Time elapsed with V = 0 Km/h and 1st gear engaged / Total waiting time | Time elapsed with V = 0 Km/h and 1st gear engaged / Total waiting time | Within calibratable threshold | Higher than threshold | |
| Impatient wait | Urban | V = 0 Km/h and gearbox in neutral | Accelerator pressure in neutral | (Time elapsed with V = 0 Km/h and accelerator > 0) / Total waiting time | Within calibratable threshold | Higher than threshold | |

Fig. 3

**European Patent Office**

## EUROPEAN SEARCH REPORT

Application Number

EP 05 42 5759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 950 839 A (C.R.F. SOCIETA' CONSORTILE PER AZIONI; C.R.F. SOCIETA CONSORTILE PER A) 20 October 1999 (1999-10-20) | 1 | B60W40/08 |
| Y | * the whole document * | 2-7 | |
| X | EP 1 256 479 A (FORD GLOBAL TECHNOLOGIES, INC) 13 November 2002 (2002-11-13) | 1 | |
| Y | * the whole document * | 2-7 | |
| Y | US 2005/143884 A1 (BIHLER EDGAR ET AL) 30 June 2005 (2005-06-30) * the whole document * | 2-7 | |
| Y | US 2005/159851 A1 (ENGSTROM JOHAN ET AL) 21 July 2005 (2005-07-21) * the whole document * | 2-7 | |
| X | US 2002/128751 A1 (ENGSTROM JOHAN ET AL) 12 September 2002 (2002-09-12) | 1 | |
| Y | * the whole document * | 2-7 | |

TECHNICAL FIELDS SEARCHED (IPC)

B60K

The present search report has been drawn up for all claims

| Place of search | Date of completion of the search | Examiner |
|---|---|---|
| Munich | 7 February 2006 | Plenk, R |

EPO FORM 1503 03.82 (P04C01)

**EP 1 780 090 A1**

## ANNEX TO THE EUROPEAN SEARCH REPORT
## ON EUROPEAN PATENT APPLICATION NO.

EP 05 42 5759

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2006

| Patent document cited in search report | | Publication date | Patent family member(s) | | Publication date |
|---|---|---|---|---|---|
| EP 0950839 | A | 20-10-1999 | DE | 69909166 D1 | 07-08-2003 |
| | | | DE | 69909166 T2 | 15-01-2004 |
| | | | ES | 2201591 T3 | 16-03-2004 |
| | | | IT | TO980325 A1 | 18-10-1999 |
| | | | US | 6253139 B1 | 26-06-2001 |
| EP 1256479 | A | 13-11-2002 | NONE | | |
| US 2005143884 | A1 | 30-06-2005 | DE | 10153987 A1 | 28-05-2003 |
| | | | WO | 03039914 A1 | 15-05-2003 |
| | | | EP | 1441927 A1 | 04-08-2004 |
| | | | JP | 2005508061 T | 24-03-2005 |
| US 2005159851 | A1 | 21-07-2005 | US | 2002128751 A1 | 12-09-2002 |
| US 2002128751 | A1 | 12-09-2002 | US | 2005159851 A1 | 21-07-2005 |

EPO FORM P0459

For more details about this annex : see Official Journal of the European Patent Office, No. 12/82

8